(19) Europäisches Patentamt
European Patent Office
Office européen des brevets

(11) Publication number: **0 256 174 B1**

(12) **EUROPEAN PATENT SPECIFICATION**

(45) Date of publication of patent specification: **13.11.91**

(51) Int. Cl.⁵: **B60R 19/02,** B60R 19/18

(21) Application number: **86304967.2**

(22) Date of filing: **26.06.86**

(54) Automobile bumper.

(30) Priority: **26.06.86 JP 140998/85**

(43) Date of publication of application:
**24.02.88 Bulletin 88/08**

(45) Publication of the grant of the patent:
**13.11.91 Bulletin 91/46**

(84) Designated Contracting States:
**BE DE FR GB IT NL SE**

(56) References cited:
**FR-A- 2 536 711**
**US-A- 4 424 996**
**US-A- 4 533 166**

(73) Proprietor: **Tonen Corporation**
**1-1 Hitotsubashi, 1-Chome Chiyoda-Ku**
**Tokyo 100(JP)**

(72) Inventor: **Yamazaki, Masayuki**
**8-231, Shimoda-cho 5-chome Kohoku-ku**
**Yokohami-shi Kanagawa-ken(JP)**
Inventor: **Takado, Yutaka**
**5-6, Shin-machi Kanagawa-ku**
**Yokohama-shi Kanagawa-ken(JP)**
Inventor: **Mikami, Takashi**
**23-48, Izumihon-cho 3-chome**
**Komae-shi Tokyo(JP)**

(74) Representative: **Hall, Graeme Keith et al**
**Frank B. Dehn & Co. Imperial House 15-19**
**Kingsway**
**London WC2B 6UZ(GB)**

Rank Xerox (UK) Business Services

## Description

The present invention relates to a bumper to be attached to a vehicle such as an automobile, as described in the preamble of claim 1.

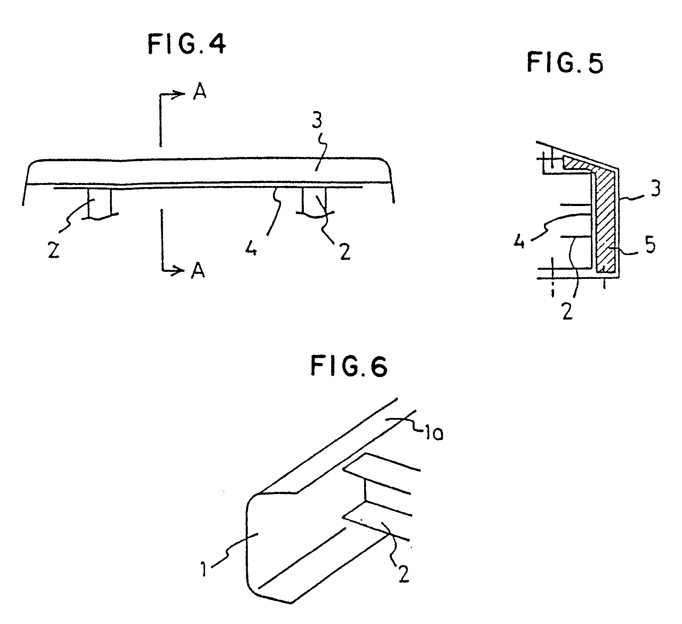

Conventional automobile bumpers are illustrated in Figures 4,5 and 6 of the accompanying drawings. Such bumpers are mostly made of metal and are, as illustrated in Fig 6, constucted of a metal plate 1, with the edges 1a thereof folded inward, and a stay 2 as a fixture.

Recently, bumpers made of synthetic resin have been marketed from the standpoint of weight reduction and corrosion resistance. An example of such bumpers is shown in Figs. 4 and 5. It has a surface skin 3 of plate member formed by injection molding or compression molding of a synthetic resin such a polyurethane and PP/EPR/filler composite. (PP and EPR stand for polypropylene and ethylene-propylene rubber, respectively.) Usually, the surface skin 3 is provided with a continuous rib on the back which extends in the lengthwise direction. The rib is intended to reduce the deformation of the bumper at the time of collision. The reinforcement with this rib alone is not enough to protect the car body from shocks. For increased protection, the surface skin is backed up with a cushioning material 5 (such as polyurethane foam) and a metal reinforcement 4. The metal reinforcement has a drawback that it easily undergoes plastic deformation (permanent deformation) and does not return to its original shape, because its elastic deformation is small although its rigidity is great. In addition, the metal reinforcement adds to a weight and requires treatments for corrosion resistance.

Another disadvantage of the metal reinforcement 4 is that it does not sufficiently reinforce the bumper corners because it is not readily worked to the corner curve. This results in a bumper with weak corners.

Incidentally, the metal reinforcement 4 and the surface skin 3 are joined together by a bolt, and the reinforcement 4 is joined to the stay 2 by welding or bolting,

Document FR-A-2.536.711 is relating to a bumper as defined in the preamble of claim 1, wherein, if the bumper is hit, the reinforcing member will directly take the shock.

It is an object of the present invention to provide a new automobile bumper which is free of the above-mentioned disadvantages. The automobile bumper of this invention is light in weight and is improved in rigidity and impact resistance and also in resistance to corner shocks.

Means to solve the problems The gist of the invention resides in a vehicle bumper, especially an automobile bumper, of the type having a surface skin, a reinforcement comprising a box structure inside the surface skin and stays to attach the bumper to the body, characterized in that said surface skin comprises a plate extending substantially parallel of said box structure which is forwardly spaced from this box structure.

Function of the invention

The automobile bumper of this invention has the following advantages. It is very light in weight because both the surface skin and reinforcement may be made of synthetic resin. The reinforcement box structure forms a double box structure in combination with the surface skin. (In the conventional bumper, the reinforcement is merely a plate and it forms a single box in combination with the surface skin.) This double box structure prevents the surface skin from flattening and also disperses and absorbs shocks at the time of collision.

Since the reinforcement may be made of synthetic resin, it is easy to form a curve at the corner. In addition, if the reinforcement is made by blow molding, the ribs are easily formed and the assembling is performed simply with a minimum of cost.

The invention is now described in more detail, though only by way of illustration, with refence to the accompanying drawings, in which:-

Fig. 1 is a longitudinal sectional view of an embodiment of the bumper of this invention.
Fig. 2 is an exploded perspective view of the same embodiment as above.

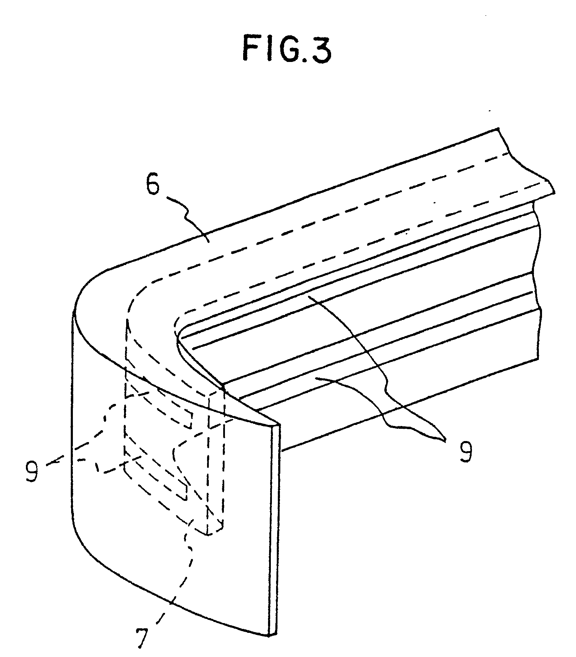

Fig. 3 is a perspective view of the corner of the same embodiment as above.
Fig. 4 is a plan view of the conventional bumper.
Fig. 5 is a sectional view taken along the line A-A in Fig. 4.
Fig. 6 is a perspective view of another example of the conventional bumper.

In the figures, reference numeral 6 indicates the surface skin plate member, reference numeral 7 indicates the reinforcement box structure installed behind the surface skin plate member, and reference numeral 8 indicates the stay to join the reinforcement to the car body.

The surface skin 6 made of synthetic resin has the edges folded inward like the conventional automobile bumpers. The reinforcement 7 is also made of synthetic resin. A suitable synthetic resin is a

EP 0 256 174 B1

thermoplastic resin. Examples of such resins which can be used alone include polypropylene (PP), high-density polyethylene (HDPE), low-density polyethylene (LDPE), linear low-density polyethylene (LLD$_{PE}$)-,polyvinyl chloride (PVC), polycarbonate (PC), nylon, polybutylene terephathalate (PBT), polyethylene terephathalate (PET), polystyrene (PS), polymethyl methacrylate (PMMA), polyoxymethylene (POM), acrylo-nitrile-butadiene-styrene resin (ABS), acrylonitrile-styrene copolymer (AS), ethylene-vinyl acetate copolymer (EVA), poly-4-methyl-pentene-1 (PTX), polyphenylene oxide (PPO), polyethersulfone (PES), polyphenylene sulfide (PPS), ethylene-propylene rubber (EPR), and ethylene-propylene-diene terpolymer (EPDM).

Among these resins, polypropylene (PP), ethylene-propylene rubber (EPR), and high-density polyethylene (HDPE), or high-density polyethylene and ethylene-propylene rubber (EPR) may be used in combination with one another. The above-mentioned thermoplastic resins may be incorporated with a reinforcing filler such as glass fiber, talc, mica, and calcium carbonate.

The surface skin 6 is formed by injection molding or compression molding as in the conventional cases. On the other hand, the reinforcement 7 is characterized by containing one or more recessed indentations (grooves) lengthwise, the box structure thereby forming a reinforcing rib 9. The box structure can be formed by blow molding. The recessed reinforcing rib 9 which is preferably in the form of a "U" shaped channel projecting inward the reinforcement 7, is also formed simultaneously in the reinforcement 7 during blow molding. The rib 9 side walls may be substantially perpendicular to the surface of the reinforcement 7. In a preferred embodiment of the invention, the surface skin contains one or more flangelike ribs 6a projecting from the surface skin.

The edges 7a of the reinforcement 7 are curved inward in conformity with the shape of the surface skin 6.

The surface skin 6 and the reinforcement 7 may be joined together by any means such as, for example, with bolts, by fusion-bonding together by means of hot plate, vibration, high-frequency, or ultrasonic excitation if they are made of similar resins. The fusion-bonding may be achieved along almost the full length of the reinforcement 7 in the lengthwise direction of the bumper. Therefore, it provides a firm surface bonding over a broad area, and the surface bonding is less liable to local deformation unlike the bolt joining which concentrates the stresses to fixed parts.

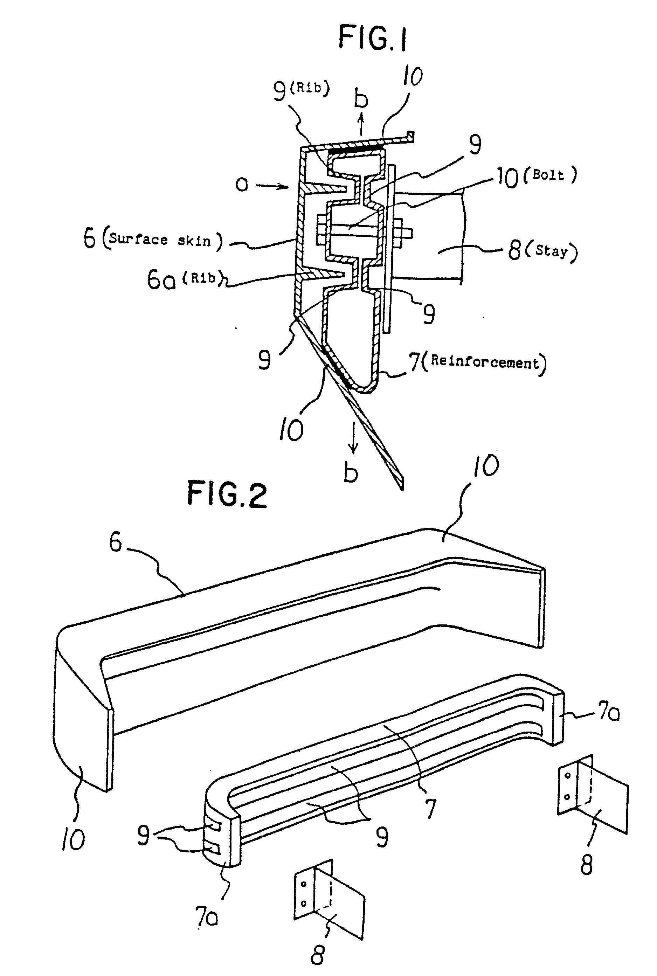

In the case where the surface skin 6 has one or more integrally formed flangelike ribs 6a inside, as shown in Fig. 1, the ribs 6a should be formed such that it fits in the recessed part of the reinforcement rib 9 on the reinforcement 7. The surface skin 6 and the reinforcement 7 should be assembled such that they form a box, leaving a certain space therein which is preferably sufficient to permit the skin member subtantially to return to its original position after deformstion in an 8 km/h impact.

The stay 8 to attach the bumper to the car body is a metal fixture having a T cross-section. The flat head is brought into contact with the rear of the reinforcement 7, and they are joined together with bolts 10 passing through them. For the convenience of assembling, the stay 8 is previously bolted to the reinforcement 7 and then the surface skin 6 is attached to the reinforcement 7.

The bumper of this invention constructed as mentioned above absorbs shocks in the following manner. When the bumper receives a shock from the front as shown by the arrow (a), the surface skin 6 is forced to become flat and expand in the direction of the arrows (b). However, this deformation is prevented by the reinforcement 7, and the plastic deformation of the reinforcement 7 is also suppressed by the box structure. The deformation by shocks is also minimized by the high rigidity because of the beam structure formed by the rib 9 extending in the lengthwise direction.

Examples

In order to demonstrate the effect of the invention, the following experiments were carried out and are now reported by way of illustration only,
A bumper of the invention with a reinforcement member 1.4 meter long, 0.1 meter wide, and 0.05 meter high, was produced from high density polyethylene(HDPE) by blow molding on a large-sized blow molding machine (Model 1PB-200C, made by Ishikawajima-Harima Heavy Industries Co Ltd).It was fusion-bonded by vibration to the bumper surface made of a composite material of PP/EPR/talc. The bumper of this invention was compared with a conventional bumper made up of a surface skin (polyurethane), cushioning material (polyurethane foam), and metal reinforcement.

Each bumper sample was attached to a dummy cab body, and was subjected to a pendulum impact test. The pendulum was allowed to hit the center of the bumper at a speed equivalent to 8 km/h. The maximum displacement that took place when the pendulum hit the sample was measured, and at the same time, the permanent deformation after hitting was also measured. The results are shown in the following table.

3

EP 0 256 174 B1

| Items | Conventional bumper | Bumper of this invention |
|---|---|---|
| Structure | Bumper surface skin/ metal reinforcement | Bumper surface skin/ resin reinforcement |
| Weight (excluding stay) | 9 kg (including 3 kg of surface skin) | 5 kg (including 3 kg of surface skin) |
| Speed of impact | 8 km/h | 8 km/h |
| Maximum displacement | 55 mm | 50 mm |
| Permanent deformation | 50 mm | 2 mm |
| Damage to joint | none | none |

It is noted from this table that the bumper of this invention is nearly half as heavy as the conventional one provided with a metal reinforcement, and yet it withstands an impact of 8 km/h and returns to its original shape with a minimum of permanent deformation after impact.

Effect of the invention

As mentioned above, the automobile bumper of this invention may be made of synthetic resin except the stay; and therefore, it is light in weight and superior in corrosion resistance. In addition, it has a reinforcement of box structure and the reinforcement in combination with the surface skin form a double box structure throughout the bumper. This structure improves the ability to return to the original shape and permits the reinforcement to disperse and absorb the shocks to the bumper.

The ends of the reinforcement can be easily finished in curve, and the bumper corners can be completely reinforced. Finally, the ribs can be easily formed by blow molding without additional steps.

**Claims**

1. Vehicle bumper member comprising a skin member (6), a reinforcement member (7) within the skin member (6), and means (8,10) to attach the bumper to a vehicle, wherein the reinforcement member (7) comprises an elongate box structure having at least one continuous rib in the form of a recessed channel (9) extending lengthwise the box structure, the skin member (6) comprises a plate extending substantially parallel of said box structure, said plate member edges (7a) curving inwardly and joined together with said box structure at the box structure upper and lower panels, with means for joining this skin member to the box structure, characterized in that said plate is forwardly spaced from said box structure.

2. The vehicle bumper according to claim 1, wherein the skin member (7) and the box structure are composed of synthetic resin.

3. The vehicle bumper according to claim 2, wherein the synthetic resin is selected from polypropylene, ethylene-propylene rubber, high density polyethylene, and blends of high density polyethylene and ethylene-propylene rubber.

4. The vehicle bumper according to any of claims 1 to 3, wherein the skin member (6) comprises one or more inwardly projecting flange ribs (6a) which fit in the or each recessed channel (9) in the box

4

structure.

5. The vehicle bumper member according to any of claims 1 to 4, wherein the vehicle is an automobile.

6. The vehicle bumper member according to any of claims 1 to 5, wherein said space between said skin member (6) and said elongate box structure is sufficient to permit the skin member (6) substantially to return to its original position after deformation by an eight kilometers per hour impact of the vehicle to which it is to be attached.

**Revendications**

1. Pare-chocs, pour véhicule, comprenant un élément de carénage (6), un élément de renfort (7), disposé à l'intérieur de cet élément de carénage (6), et des moyens (8, 10) servant à fixer le pare-chocs sur un véhicule, l'élément de renfort (7) comprenant une structure en caisson et allongée, comportant au moins une nervure continue se présentant sous la forme d'une gouttière en retrait (9) s'étendant dans le sens de la longueur de la structure en caisson, la pièce de carénage (6) comprenant une plaque s'étendant d'une manière pratiquement parallèle à cette structure en caisson et les côtés (7a) de l'élément en forme de plaque s'incurvant vers l'intérieur et étant réunis à la structure en caisson par les panneaux supérieur et inférieur de cette dernière, avec des moyens permettant de réunir l'élément de carénage à la structure en caisson, caractérisé en ce que la plaque est espacée vers l'avant par rapport à la structure en caisson.

2. Pare-chocs pour véhicule conforme à la revendication 1, dans lequel la pièce de carénage (7) et la structure en caisson sont composées de résine synthétique.

3. Pare-chocs pour véhicule suivant la revendication 2, dans lequel la résine synthétique est choisie parmi le polypropylène, le caoutchouc éthylène-propylène, le polyéthylène haute densité et des mélanges de polyéthylène haute densité et de caoutchouc éthylène-propylène.

4. Pare-chocs pour véhicule suivant l'une quelconque des revendications 1 à 3, dans lequel l'élément de carénage (6) comporte une ou plusieurs nervures (6a), en forme d'aile et faisant saillie vers l'intérieur, qui s'emboîtent dans la gouttière en retrait (9), ou chaque gouttière en retrait (9), ménagée dans la structure en caisson.

5. Pare-chocs pour véhicule suivant l'une quelconque des revendications 1 à 4, dans lequel le véhicule est une automobile.

6. Pare-chocs pour véhicule suivant l'une quelconque des revendications 1 à 5, dans lequel l'espace situé entre l'élément de carénage (6) et la structure allongée en caisson est suffisant pour permettre à l'élément de carénage (6) de revenir pratiquement à sa position initiale après déformation sous l'effet d'un choc, à huit kilomètres par heure, du véhicule sur lequel il doit être fixé.

**Patentansprüche**

1. Fahrzeugstoßstangenteil mit einem Abdeckteil (6), einem Verstärkungsteil (7) in dem Abdeckteil (6) und Mitteln (8,10) zum Befestigen der Stoßstange an einem Fahrzeug, wobei das Verstärkungsteil (7) eine langgestreckte Kastenstruktur mit wenigstens einer durchlaufenden Rippe in Form eines längs der Kastenstruktur verlaufenden vertieften Kanals (9) aufweist, das Abdeckteil (6) eine im wesentlichen parallel zu der Kastenstruktur verlaufende Platte aufweist, wobei Eckteile der Platte einwärts gekrümmt und an oberen und unteren Wänden der Kastenstruktur mit der Kastenstruktur verbunden sind, und mit Mitteln zum Verbinden dieses Abdeckteils mit der Kastenstruktur, **dadurch gekennzeichnet,** daß die Platte mit Abstand vor der Kastenstruktur angeordnet ist.

2. Fahrzeugstoßstange nach Anspruch 1, wobei das Abdeckteil (7) und die Kastenstruktur aus Kunstharz gebildet sind.

3. Fahrzeugstoßstange nach Anspruch 2, wobei das Kunstharz aus Polypropylen, Ethylen-Propylen-Gummi, Polyethylen hoher Dichte und Gemischen aus Polyethylen hoher Dichte und Ethylen-Propylen-Gummi ausgewählt ist.

4.  Fahrzeugstoßstange nach einem der Ansprüche 1 bis 3, wobei das Abdeckteil (6) eine oder mehrere einwärts vorstehende Stegrippen (6a) aufweist, die in den oder jeden vertieften Kanal (9) in der Kastenstruktur passen.

5.  Fahrzeugstoßstangenteil nach einem der Ansprüche 1 bis 4, wobei das Fahrzeug ein Automobil ist.

6.  Fahrzeugstoßstangenteil nach einem der Ansprüche 1 bis 5, wobei der Abstand Zwischen dem Abdeckteil (6) und der langgestreckten Kastenstruktur (6) ausreicht, daß das Abdeckteil (6) nach einer Verformung durch einen Aufprall mit acht Stundenkilometern des Fahrzeugs, an dem es zu befestigen ist, in seine ursprüngliche Position im wesentlichan zurückkehren kann.

# FIG.1

- 9 (Rib)
- b
- 10
- 9
- 10 (Bolt)
- a
- 6 (Surface skin)
- 6a (Rib)
- 8 (Stay)
- 9
- 9
- 7 (Reinforcement)
- 10
- b

# FIG.2

- 6
- 10
- 7a
- 7
- 10
- 9
- 9
- 7a
- 8
- 8

# FIG.3

FIG.4

FIG.5

FIG.6